(19) Europäisches Patentamt
European Patent Office
Office européen des brevets

(11) **EP 2 973 988 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **14704365.7**

(22) Anmeldetag: **14.02.2014**

(51) Int Cl.:
***H02P 6/18*** *(2016.01)*

(86) Internationale Anmeldenummer:
**PCT/EP2014/052931**

(87) Internationale Veröffentlichungsnummer:
**WO 2014/139754 (18.09.2014 Gazette 2014/38)**

(54) **REGELUNGSSYSTEM FÜR EINE SYNCHRONMASCHINE UND VERFAHREN ZUM BETREIBEN EINER SYNCHRONMASCHINE**

CONTROL SYSTEM FOR A SYNCHRONOUS MACHINE AND METHOD FOR OPERATING A SYNCHRONOUS MACHINE

SYSTÈME DE RÉGULATION POUR MACHINE SYNCHRONE ET PROCÉDÉ PERMETTANT DE FAIRE FONCTIONNER UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2013 DE 102013204194**

(43) Veröffentlichungstag der Anmeldung:
**20.01.2016 Patentblatt 2016/03**

(73) Patentinhaber: **Robert Bosch GmbH**
**70442 Stuttgart (DE)**

(72) Erfinder:
• **PAULUS, Sebastian**
**73728 Esslingen Am Neckar (DE)**
• **GOETTING, Gunther**
**70499 Stuttgart (DE)**

(56) Entgegenhaltungen:
**US-A1- 2011 199 031**

• **ARIAS A ET AL: "Sensorless Field Oriented Control with Matrix Converters and Surface Mount Permanent Magnet Synchronous Machines", ELECTRONICS, CIRCUITS AND SYSTEMS, 2008. ICECS 2008. 15TH IEEE INTERNATIONAL CONFERENCE ON, IEEE, PISCATAWAY, NJ, USA, 31. August 2008 (2008-08-31), Seiten 734-737, XP031362592, ISBN: 978-1-4244-2181-7**
• **ARIAS A ET AL: "Angle estimation for Sensorless Field Oriented Control with Matrix Converters and Surface Mount Permanent Magnet Synchronous Machines", POWER ELECTRONICS SPECIALISTS CONFERENCE, 2008. PESC 2008. IEEE, IEEE, PISCATAWAY, NJ, USA, 15. Juni 2008 (2008-06-15), Seiten 3659-3664, XP031300527, ISBN: 978-1-4244-1667-7**
• **ANTONI ARIAS ET AL: "Position estimation with voltage pulse test signals for Permanent Magnet Synchronous Machines using Matrix Converters", COMPATIBILITY IN POWER ELECTRONICS, 2007. CPE '07, IEEE, PI, 1. Mai 2007 (2007-05-01), Seiten 1-6, XP031130791, ISBN: 978-1-4244-1054-5**

**Beschreibung**

Die Erfindung betrifft ein Regelungssystem für eine Synchronmaschine und ein Verfahren zum Betreiben einer Synchronmaschine.

Stand der Technik

Bei der Regelung einer Synchronmaschine, beispielsweise in einem elektrischen Antriebssystem eines elektrisch betriebenen Fahrzeugs, spielt die Kenntnis über die relative Position des Rotors zum Stator der Synchronmaschine eine zentrale Rolle. Um ein gefordertes Drehmoment mit einer Synchronmaschine bereitzustellen, wird im Stator der Maschine ein rotierendes elektrisches Feld erzeugt, welches sich synchron mit dem Rotor dreht. Für die Erzeugung dieses Feldes wird der aktuelle Winkel des Rotors für die Regelung benötigt.

Eine Möglichkeit für die Bestimmung des Rotorwinkels besteht darin, Testspannungssignale in eine oder mehrere der Phasen der Synchronmaschine einzuspeisen und die Systemantwort durch Auswertung der Phasenströme im Sternpunkt der Synchronmaschine zu messen, um daraus Rückschlüsse auf den aktuellen Rotorwinkel zu ziehen.

Beispielsweise offenbart die Druckschrift WO 2009/136381 A2 ein Verfahren zur Bestimmung des Rotorwinkels einer Synchronmaschine, bei der durch Verschiebung von Taktmustern einer pulsbreitenmodulierten Phasenansteuerung Messperioden zur Messung von Spannungen im Sternpunkt optimiert werden. Ein beispielhaftes Testsignalinjektionsverfahren für Drehstrommaschinen ist in Linke, M. et al.: "Sensorless speed and position control of synchronous machines using alternating carrier injection", Electric Machines and Drives Conference, IEMDC 2003, IEEE International gezeigt. Die Druckschrift DE 10 2006 046 638 A1 offenbart schließlich ein weiteres Testsignalverfahren zur Ermittlung von Phasenlageninformationen eines Rotors einer Synchronmaschine. Die Druckschrift US 2011/0199031 A1 offenbart eine Motorsteuerung zur Positionsbestimmung eines Rotors in einer Wechselstrommaschine Das IEEE-Papier Sensorless Field Oriented Control with Matrix Converters and Surface Mount Permanent Magnet Synchronous Machine offenbart eine Motorregelung einer Permanentmagnetsynchronmaschine mit Rotorlagenschätzung auf der Grundlage der Differenz zwischen Längs- und Querinduktivität.

Viele dieser geberlosen Verfahren basieren auf einer Einspeisung von phasenversetzten Spannungspulsen, die die Anisotropie einer Synchronmaschine ausnutzen, um aus den unterschiedlichen Systemantworten eine Rotorlageinformation zu gewinnen. In Abhängigkeit von der Nutzbestromung der Synchronmaschine kann es an gewissen Arbeitspunkten zu einer Abnahme dieser Anisotropie kommen, so dass die Rotorlageinformation nicht mehr oder zumindest nicht mehr zuverlässig genug aus den Messwerten extrahiert werden kann. Um den Einsatzbereich geberloser Verfahren erweitern zu können, besteht daher ein Bedarf an Lösungen in der Ansteuerung einer Synchronmaschine, die bessere Randbedingungen für die Zuverlässigkeit und Stabilität von Verfahren zum Ermitteln von Rotorwinkeln schaffen können.

Offenbarung der Erfindung

Die vorliegende Erfindung schafft gemäß einem Aspekt ein Verfahren zum Betreiben einer Synchronmaschine, mit den Schritten des Ermittelns jeweils eines Differenzwertes zwischen der Rotorinduktivität der Synchronmaschine in Polachsenrichtung und der Rotorinduktivität der Synchronmaschine in Pollückenrichtung für eine Vielzahl von unterschiedlichen 2-Tupeln aus im rotorfesten Koordinatensystem der Synchronmaschine eingestellten Nutzbestromungswerten, des Erstellens eines Kennfelds für die ermittelten Differenzwerte in Abhängigkeit von den 2-Tupeln der Nutzbestromungswerten, des Festlegens einer drehmomentabhängigen Arbeitspunkttrajektorie für die 2-Tupel der Nutzbestromungswerte unter Berücksichtigung der Höhe der ermittelten Differenzwerte entlang der festzulegenden Arbeitspunkttrajektorie, und des Betreibens der Synchronmaschine gemäß der festgelegten Arbeitspunkttrajektorie.

Gemäß einem weiteren Aspekt schafft die vorliegende Erfindung ein Regelungssystem für eine Synchronmaschine, mit einer Regelungseinrichtung, welche dazu ausgelegt ist, eine feldorientierte Regelung für die Synchronmaschine durchzuführen, und mit einer Steuereinrichtung, welche dazu ausgelegt ist, eine Arbeitspunkttrajektorie für die feldorientierte Regelung der Regelungseinrichtung gemäß dem erfindungsgemäßen Verfahren festzulegen.

Vorteile der Erfindung

Eine Idee der vorliegenden Erfindung ist es, den Einsatzbereich geberloser Rotorwinkelbestimmungsverfahren für Synchronmaschinen, insbesondere bei niedrigen Drehzahlen, zu erweitern. Die Erfindung beruht auf der Erkenntnis, dass durch eine Anpassung der Arbeitspunkttrajektorie einer Synchronmaschine die Amplitude von auf ein gebeloses Rotorwinkelbestimmungsverfahren hin erzeugten und ermittelten Systemantworten gesteigert und damit die Zuverlässigkeit und Genauigkeit des Rotorwinkelbestimmungsverfahrens verbessert werden kann. Dazu wird die Arbeitspunkttrajektorie der Synchronmaschine so eingestellt, dass die Differenz zwischen d- und q-Induktivität der Synchronmaschine im rotorfesten Koordinatensystem möglichst hoch ist. Die Festlegung der Arbeitspunkttrajektorie der Synchronmaschine erfolgt anhand eines vorab zu bestimmenden Kennfelds über alle möglichen 2-Tupel an Nutzbestromungswerten im rotorfesten Koordinatensystem, in welchem die Amplituden der Systemantworten als Isohypsen aufgetragen sind. Anhand einer Ausbalancierung zwischen Wirkungsgrad der Synchronmaschine und möglichst hoher Differenz zwischen d- und q-Induktivität der Synchronmaschine kann die Arbeitspunkttrajektorie als Kompromiss zwischen Genauigkeit der Rotorwinkelbestimmung und Effizienz des Maschinenbetriebs festgelegt werden.

Ein erheblicher Vorteil dieser Vorgehensweise besteht darin, dass der Arbeitsbereich des Rotorwinkelbestimmungsverfahrens für die Synchronmaschine erweitert werden kann. Beispielsweise kann im Bereich höherer Drehmomente die Sättigung der Synchronmaschine durch die Nutzbestromung entsprechend gesenkt werden, wodurch die Signifikanz der Rotorlageinformation gesteigert wird.

Gemäß einer Ausführungsform des erfindungsgemäßen Verfahrens kann das Ermitteln jeweils eines Differenzwertes zwischen der Rotorinduktivität der Synchronmaschine in Polachsenrichtung und der Rotorinduktivität der Synchronmaschine in Pollückenrichtung die Schritte des Erzeugens einer Vielzahl von Testspannungspulsen mit einer Arbeitsfrequenz, des Einspeisens der Vielzahl von Testspannungspulsen mit jeweils über eine volle Rotorumdrehung des Rotors der Synchronmaschine verteilten unterschiedlichen Phasenversätzen zur Rotorlage des Rotors der Synchronmaschine, des Messens der Phasenströme der Synchronmaschine als Systemantwort auf die Vielzahl der eingespeisten Testspannungspulse, des Ermittelns der Amplitude des Phasenstromverlaufs der gemessenen Phasenströme in Abhängigkeit der eingestellten Phasenversätze zum Ermitteln des Differenzwertes, und des Iterierens der Schritte des Erzeugens, des Einspeisens, des Messens und des Ermittelns jeweils für eine Vielzahl von unterschiedlichen 2-Tupeln aus im rotorfesten Koordinatensystem der Synchronmaschine eingestellten Nutzbestromungswerten umfassen. Viele Rotorwinkelbestimmungsverfahren beruhen gerade auf der Einspeisung von Testsignalen in den Rotor der Synchronmaschine. Besonders für diese Verfahren ist das erfindungsgemäße Verfahren sehr gut geeignet.

Gemäß einer weiteren Ausführungsform des erfindungsgemäßen Verfahrens kann das Festlegen der Arbeitspunkttrajektorie unter gleichzeitiger Berücksichtigung des Wirkungsgrads der Synchronmaschine erfolgen. Dies ermöglicht eine Ausbalancierung zwischen effizientem Betrieb der Synchronmaschine und Verbesserung der Genauigkeit des Rotorwinkelbestimmungsverfahrens.

Gemäß einer weiteren Ausführungsform des erfindungsgemäßen Verfahrens kann das Festlegen der Arbeitspunkttrajektorie derart erfolgen, dass die ermittelten Differenzwerte entlang der Arbeitspunkttrajektorie möglichst gering sind und der Wirkungsgrad der Synchronmaschine entlang der Arbeitspunkttrajektorie einen vorbestimmbaren Schwellwert nicht unterschreitet. Dadurch kann die Arbeitspunkttrajektorie in einem Randwertproblem möglichst einfach optimiert werden.

Gemäß einer weiteren Ausführungsform des erfindungsgemäßen Verfahrens kann das Festlegen der Arbeitspunkttrajektorie derart erfolgen, dass die Gesamtamplitude der Nutzbestromungswerte entlang der Arbeitspunkttrajektorie möglichst gering ist.

Gemäß einer Ausführungsform des erfindungsgemäßen Regelungssystems kann das Regelungssystem weiterhin eine Synchronmaschine aufweisen, welche dazu ausgelegt ist, durch die Regelungseinrichtung gemäß der festgelegten Arbeitspunkttrajektorie der Steuereinrichtung betrieben zu werden.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Fig. 1 eine schematische Darstellung eines Regelungssystems für eine Synchronmaschine gemäß einer Ausführungsform der vorliegenden Erfindung;

Fig. 2 ein schematisches Kennfeld für die Abhängigkeit der Induktivitätsdifferenz zwischen q- und d-Induktivität einer Synchronmaschine von den Nutzbestromungwerten gemäß einer weiteren Ausführungsform der vorliegenden Erfindung; und

Fig. 3 eine schematische Darstellung eines Verfahrens zum Einstellen des Arbeitspunkts einer Synchronmaschine gemäß einer weiteren Ausführungsform der vorliegenden Erfindung.

Gleiche Bezugszeichen bezeichnen im Allgemeinen gleichartige oder gleich wirkende Komponenten. Die in den Figuren gezeigten schematischen Signal- und Parameterverläufe sind nur beispielhafter Natur, die aus Gründen der Übersichtlichkeit idealisiert abgebildet sind. Es versteht sich, dass sich in der Praxis aufgrund von abweichenden Randbedingungen abweichende Signal- und Parameterverläufe ergeben können, und dass die dargestellten Signal- und Parameterverläufe lediglich zur Veranschaulichung von Prinzipien und funktionellen Aspekten der vorliegenden Erfindung dienen.

Synchronmaschinen im Sinne der vorliegenden Erfindung sind elektrische Maschinen, bei der ein konstant magnetisierter Läufer oder Rotor synchron von einem zeitabhängigen magnetischen Drehfeld im umgebenden Ständer oder Stator durch magnetische Wechselwirkung angetrieben wird, so dass der Rotor eine zu den Spannungsverhältnissen im Stator synchrone Bewegung ausführt, das heißt, dass die Drehzahl über die Polpaarzahl von der Frequenz der Statorspannung abhängig ist. Synchronmaschinen im Sinne der vorliegenden Erfindung können beispielsweise Drehstrom-Synchronmaschinen sein, die zum Beispiel als Außen- oder Innenpolmaschinen ausgebildet sind, die über einen Rotor und einen Stator verfügen. Weiterhin können Synchronmaschinen im Sinne der vorliegenden Erfindung Schenkelpolmaschinen oder Vollpolmaschinen umfassen. Vollpolmaschinen besitzen eine achsunabhängige Induktivität des Rotors, während Schenkelpolmaschinen eine ausgezeichnete Polachse, auch d-Achse genannt, aufweisen, in Richtung derer aufgrund des geringeren Luftspalts die Hauptinduktivität größer ist als in Richtung der Pollücke, auch q-Achse genannt. Die nachstehend genannten Verfahren und Steuereinrichtungen lassen sich prinzipiell gleichermaßen für Vollpolmaschinen und Schenkelpolmaschinen einsetzen, es sei denn, es wird im Folgenden explizit auf unterschiedliche Behandlung von Synchronmaschinentypen Bezug genommen.

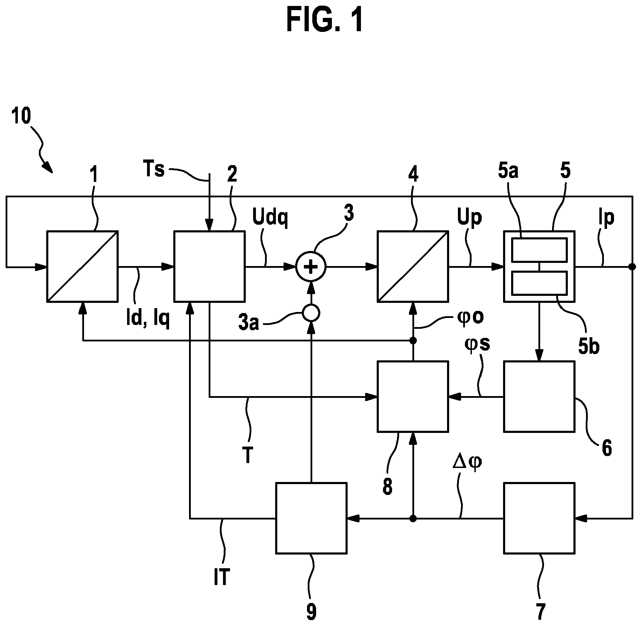

Fig. 1 zeigt eine schematische Darstellung eines Regelungssystems 10 für eine elektrische Antriebseinheit 5 mit einem Wechselrichter 5a, der eine Synchronmaschine 5b mit Drehstrom speist.

Die Synchronmaschine 5b kann beispielsweise eine dreiphasige Synchronmaschine sein. Es ist jedoch prinzipiell auch möglich, eine andere Anzahl von Phasen für die Synchronmaschine vorzusehen. Dabei spielt die Regelung der Synchronmaschine 5b in der elektrischen Antriebseinheit 5 eine zentrale Rolle. Um ein gefordertes Drehmoment mit einer Synchronmaschine 5b bereitzustellen, wird im Stator der Maschine ein rotierendes elektrisches Feld erzeugt, welches sich synchron mit dem Rotor dreht. Für die Erzeugung dieses Feldes wird der aktuelle Winkel des Rotors für die Regelung benötigt.

Das Regelungssystem 10 umfasst daher eine Regelungseinrichtung 2, welche eine feldorientierte Regelung der Synchronmaschine 5b bzw. des Wechselrichters 5a der Antriebseinheit im rotorfesten d,q-Koordinatensystem durchführt. Dazu wird die Regelungseinrichtung 2 mit einem Solldrehmoment Ts gespeist und greift auf die momentanen Nutzbestromungswerte Iq, Id im rotorfesten d,q-Koordinatensystem zurück, die durch eine erste Transformationseinrichtung 1 bereitgestellt werden. Die erste Transformationseinrichtung 1 misst dazu die Phasenströme Ip der Synchronmaschine 5b und transformiert die Phasenströme Ip in die Nutzbestromungswerte Iq, Id.

Die Regelungseinrichtung 2 gibt Ansteuerspannungen Udq im rotorfesten d,q-Koordinatensystem der Synchronmaschine 5b an eine zweite Transformationseinrichtung 4 ab, die eine entsprechende Transformation der Ansteuerspannungen Udq in Phasenansteuerspannungen Up für die Synchronmaschine 5b vornimmt. Sowohl die erste Transformationseinrichtung 1 als auch die zweite Transformationseinrichtung 4 greifen zur Transformation auf den zeitabhängigen Rotorwinkel $\varphi_O$ des Rotors der Synchronmaschine 5b in Bezug auf den Stator der Synchronmaschine 5b zurück. Dieser Rotorwinkel $\varphi_O$ wird durch einen Beobachter 8 generiert, der wiederum auf einen ermittelten Rotorwinkel $\varphi_S$ eines Lagesensors 6 und/oder auf eine Rotorwinkeldifferenz $\Delta\varphi$, welche durch einen Winkelschätzalgorithmus 7 in Abhängigkeit von gemessenen Systemantworten der Synchronmaschine 5b ermittelt wird, zurückgreifen kann.

Der Lagesensor 6 kann beispielsweise elektrische Betriebsparameter der Synchronmaschine 5b erfassen, beispielsweise durch Erfassung der Spannung am Sternpunkt der Synchronmaschine 5b. Der Beobachter 8 kann beispielsweise einen Kalman-Beobachter, einen Luenberger-Beobachter, einen Hautus-Beobachter oder einen Gilbert-Beobachter zur Stützung und Plausibilisierung der Winkelbeobachtung $\varphi_O$ aufweisen.

Für die Speisung des Winkelschätzalgorithmus 7 ist zwischen Regelungseinrichtung 2 und zweiter Transformationseinrichtung 4 ein Summierglied 3 vorgesehen, mithilfe dessen beispielsweise Testspannungspulse $u_d$, $u_q$ einer bestimmten Arbeitsfrequenz $\omega_c$ auf die Ansteuerspannungen Udq aufmoduliert werden können. Diese Testspannungspulse $u_d$, $u_q$ können an einem Eingangsanschluss 3a durch eine Steuereinrichtung 9 eingespeist werden, die die beobachtete Winkeldifferenz des Winkelschätzalgorithmus 7 entgegennehmen kann.

Das Regelungssystem 10 eignet sich jedoch für jede andere Art von geberlosen Rotorwinkelbestimmungsverfahren ebenfalls, das heißt, alternativ zur Einspeisung von Testspannungspulsen $u_d$, $u_q$ können auch andere Methoden genutzt werden, um die Messung von Systemantworten zu ermöglichen. Beispielsweise können durch Messungen von Spannungen im Sternpunkt zu geeigneten Zeitpunkten in einer pulsbreitenmodulierten Phasenansteuerung Systemantworten zur Rotorwinkelbestimmung herangezogen werden. Es kann auch möglich sein, Testsignalverfahren zur Rotorwinkelbestimmung heranzuziehen, wobei Testsignale einer hohen Arbeitsfrequenz auf das Ansteuersignal aufmoduliert werden. Generell ist jedes geberlose Bestimmungsverfahren, welches auf einer Differenz zwischen Rotorinduktivität $L_d$ in Polachsenrichtung und der Rotorinduktivität $L_q$ in Pollückenrichtung der Synchronmaschine 5b beruht, dazu geeignet, den Winkelschätzalgorithmus 7 zur Auswertung der Winkeldifferenz zu speisen.

Die Systemantwort der Synchronmaschine 5b hängt unter anderem von der Nutzbestromung ab, deren Wert die Differenz zwischen Rotorinduktivität $L_d$ in Polachsenrichtung und der Rotorinduktivität $L_q$ in Pollückenrichtung beeinflusst. Die Längsströme $I_d$ und Querströme $I_q$ einer permanent erregten Synchronmaschine verhalten sich abhängig von der Rotorinduktivität $L_d$ in Polachsenrichtung und der Rotorinduktivität $L_q$ in Pollückenrichtung und der anliegenden Spannung $U_d$ bzw. $U_q$ wie folgt:

$$dI_d/dt = L_d^{-1} \cdot U_d - R \cdot L_d^{-1} \cdot I_d + L_q \cdot L_d^{-1} \cdot \omega_e \cdot I_q$$

$$dI_q/dt = L_q^{-1} \cdot U_q - R \cdot L_q^{-1} \cdot I_q + L_d \cdot L_q^{-1} \cdot \omega_e \cdot I_d - L_q^{-1} \cdot u_p$$

Dies gilt bei der Winkelgeschwindigkeit $\omega_e$ des Rotors der Synchronmaschine 5b, des Ohm'schen Widerstands R sowie der Polradspannung $u_p$. Darüber hinaus wird davon ausgegangen, dass der bzw. die Polschuhe nicht in Sättigung betrieben werden, das heißt, dass die Beziehung zwischen Strom und magnetischen Fluss linear ist und die jeweilige Induktivität nicht von der Stromstärke abhängig ist.

Bei hoher Nutzbestromung der Synchronmaschine 5b jedoch kann es zu einer fortschreitenden Sättigung des Rotorkerns der Synchronmaschine 5b kommen, so dass die Beziehung zwischen Strom und magnetischem Fluss eine Nichtlinearität aufweist. Insbesondere kann es bei bestimmten 2-Tupeln der Nutzbestromung Id, Iq im rotorfesten Koordinatensystem passieren, dass die Differenz zwischen Rotorinduktivität $L_d$ in Polachsenrichtung und der Rotorinduktivität $L_q$ in Pollückenrichtung verschwindet. Geberlose Rotorwinkelbestimmungsverfahren, welche auf diese Induktivitätsdifferenz angewiesen sind, um aussagekräftige Messwerte zu erhalten, können bei derartigen Arbeitspunkten an Relevanz verlieren.

Ein beispielhaftes solcher Rotorwinkelbestimmungsverfahren sei im Folgenden illustriert. Zur Bestimmung des Winkelfehlers $\Delta\varphi$ wird das folgende Testsignal $[u_d, u_q]$ an die Synchronmaschine 5b angelegt:

$$[u_d, u_q] = u_c \cdot \cos(\omega_c t) \cdot [\cos(\Delta\varphi), \sin(\Delta\varphi)]$$

Da das elektrische Verhalten der Synchronmaschine 5b für hohe Frequenzen als rein induktive Last beschrieben werden kann, ergibt sich als Systemantwort auf das Testsignal $[u_d, u_q]$ folgender Stromvektor $[i_d, i_q]$

$$[i_d, i_q] = (u_c/\omega_c) \cdot \sin(\omega_c t) \cdot [\cos(\Delta\varphi)/L_d, \sin(\Delta\varphi)/L_q]$$

Um aus diesen Strömen per Signalverarbeitung eine Winkelinformation zu extrahieren, wird der Zusammenhang zwischen den gemessenen Phasenströmen im statorfesten Koordinatensystem der Synchronmaschine 5b und den Strömen im rotorfesten Koordinatensystem benötigt. In Abhängigkeit von der geschätzten d-Richtung der Synchronmaschine 5b ergibt sich für die Ströme im rotorfesten Koordinatensystem:

$$[i_d, i_q] = u_c/(4\omega_c L_q L_d) \cdot [(L_q-L_d)(\sin(\omega_c t-2\Delta\varphi)+\sin(\omega_c t+2\,\Delta\varphi))+2(L_q+L_d)(\sin(2\,\omega_c t), (L_q-L_d)(\sin(\omega_c t-2\Delta\varphi)+\sin(\omega_c t+2\,\Delta\varphi))+2(L_q+L_d)(\sin(2\,\omega_c t)]$$

Um die gewünschten Terme mit der Winkeldifferenzinformation $\Delta\varphi$ aus den gemessenen Werten der Ströme $[i_d, i_q]$ im rotorfesten Koordinatensystem zu extrahieren, kann nach einer Hochpassfilterung, einer Konvolution mit der Arbeitsfrequenz $\omega_c$, und einer darauffolgenden Tiefpassfilterung derjenige Term erhalten werden, welcher die Winkeldifferenzinformation $\Delta\varphi$ enthält:

$$[i_d, i_q] = u_c/(4\omega_c L_q L_d) \cdot [(L_q-L_d)(\sin(2\Delta\varphi)), (L_q-L_d)(\cos(2\Delta\varphi)+(L_q+L_d)]$$

Wie sich leicht erkennen lässt, hängt die Aussagekraft der gemessenen Phasenströme im Hinblick auf die Winkeldifferenzinformation $\Delta\varphi$ von der Differenz der Induktivitäten $L_q$ und $L_d$ ab - je geringer die Differenz, desto ungenauer die Bestimmung der Winkeldifferenz $\Delta\varphi$.

Um diesem Phänomen entgegenzuwirken, ist es vorteilhaft, die Arbeitspunkte der Synchronmaschine 5b möglichst so zu wählen, dass die Differenz der Induktivitäten $L_q$ und $L_d$ möglichst groß bleibt, das heißt, dass die Synchronmaschine 5b nach Möglichkeit auch bei hohen Drehmomenten nicht in Sättigung betrieben wird.

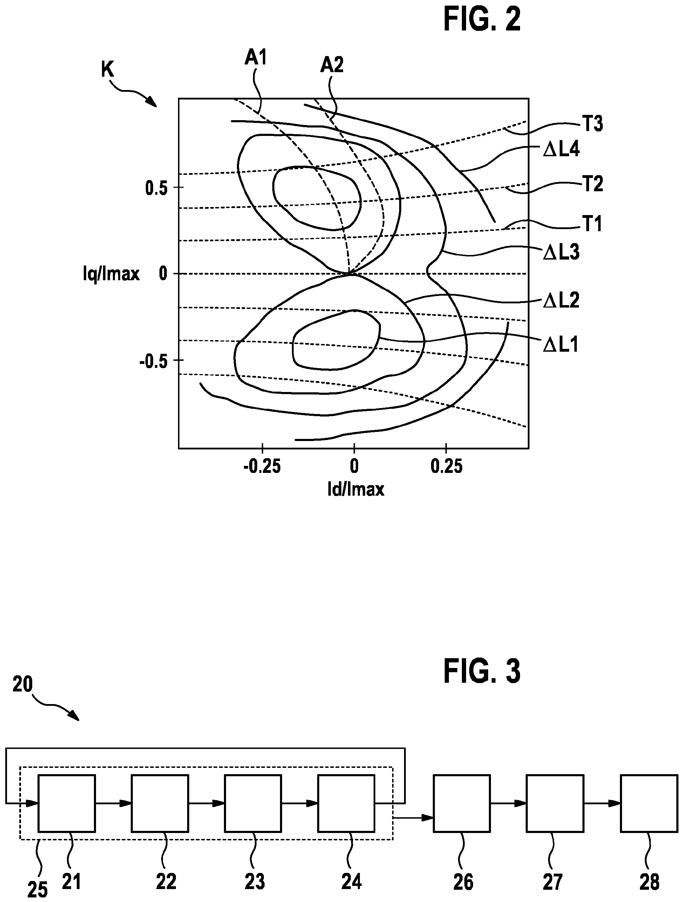

Fig. 2 zeigt hierzu eine schematische Darstellung eines Kennfelds K für die Abhängigkeit der Induktivitätsdifferenz zwischen q- und d-Induktivität einer Synchronmaschine von den Nutzbestromungwerten $I_q$ und Id.

Zum Einstellen des Arbeitspunkts der Synchronmaschine 5b kann die Steuereinrichtung 9 in Fig. 1 beispielsweise eine Vielzahl von Testspannungspulsen erzeugen, diese mit jeweils über eine volle Rotorumdrehung des Rotors der Synchronmaschine 5b verteilten unterschiedlichen Phasenversätzen zur Rotorlage des Rotors der Synchronmaschine 5b auf die Ansteuerspannungen Udq aufmodulieren, die Phasenströme Ip der Synchronmaschine 5b als Systemantwort auf die Vielzahl der eingespeisten Testspannungspulse mithilfe des Winkelschätzalgorithmus 7 messen, und die Amplitude des Phasenstromverlaufs der gemessenen Phasenströme Ip in Abhängigkeit der eingestellten Phasenversätze ermitteln.

Diese Schritte werden jeweils für eine Vielzahl von unterschiedlichen 2-Tupeln aus im rotorfesten d,q-Koordinatensystem der Synchronmaschine 5b eingestellten Nutzbestromungswerten Id und Iq durch die Steuereinrichtung 9 iteriert. Das Kennfeld K wird dann durch die zweidimensionale Auftragung der 2-Tupel der Nutzbestromungswerte Id und Iq generiert. In Fig. 2 ist beispielhaft eine Normierung auf die Gesamtamplitude der Nutzbestromung vorgenommen worden, wobei jedoch eine Normierung nicht zwingend vorgenommen werden muss.

In diesem Kennfeld K können dann die ermittelten Amplituden der Systemantworten, das heißt die Differenzen der Induktivitäten $L_q$ und $L_d$ dargestellt werden, beispielsweise als Isohypsen $\Delta$L1, $\Delta$L2, $\Delta$L3 und $\Delta$L4. Beispielsweise zeigt die Isohypse $\Delta$L1 eine geringe Induktivitätsdifferenz, und die Isohypsen $\Delta$L2 bis $\Delta$L4 jeweils stetig ansteigende Induktivitätsdifferenzen.

Generell können die Isohypsen $\Delta$L1, $\Delta$L2, $\Delta$L3 und $\Delta$L4 mit jedem beliebigen geberlosen Rotorwinkelbestimmungsverfahren generiert werden, indem jeweils ein Differenzwert zwischen der Rotorinduktivität $L_d$ der Synchronmaschine 5b in Polachsenrichtung und der Rotorinduktivität $L_q$ der Synchronmaschine 5b in Pollückenrichtung für eine Vielzahl von unterschiedlichen 2-Tupeln aus im d,q-Koordinatensystem der Synchronmaschine 5b eingestellten Nutzbestromungswerten Id und Iq ermittelt wird. Diese Differenzwerte dienen dann als Grundlage für die Auftragung der Isohypsen $\Delta$L1, $\Delta$L2, $\Delta$L3 und $\Delta$L4 im Kennfeld K.

Für jeweils vorgegebene Drehmomente können verschiedene Subkombinationen aus 2-Tupeln der Nutzbestromungswerte Id und Iq ausgewählt werden, wie durch die jeweiligen gepunkteten Linien T1, T2 und T3 angedeutet. Für die drehmomentabhängigen Arbeitspunkte ist üblicherweise eine Arbeitspunkttrajektorie A1 vorgesehen, welche gemäß dem MTPA-Verfahren ("maximum torque per ampere", maximales Drehmoment pro Ampere) festgelegt wird. Entlang dieser Arbeitspunkttrajektorie A1 kann der optimale Wirkungsgrad der Synchronmaschine 5b erreicht werden.

Wie sich allerdings aus dem Verlauf der Arbeitspunkttrajektorie A1 ergibt, verläuft diese in großen Teilen durch Arbeitspunktbereiche mit geringer Induktivitätsdifferenz, beispielsweise innerhalb des mit $\Delta$L1 gekennzeichneten Bereichs. Um nun die Zuverlässigkeit und Signifikanz von Rotorwinkelbestimmungsverfahren, die auf dieser Induktivitätsdifferenz beruhen, zu verbessern, kann eine andere drehmomentabhängige Arbeitspunkttrajektorie A2 für die 2-Tupel der Nutzbestromungswerte Id und Iq festgelegt werden, welche die Höhe der ermittelten Amplituden berücksichtigt. Dabei ist ein gewisser Tradeoff zwischen Wirkungsgrad der Synchronmaschine 5b und ausreichend hoher Induktivitätsdifferenz in Kauf zu nehmen.

Beispielsweise kann die Arbeitspunkttrajektorie A2 unter gleichzeitiger Berücksichtigung des Wirkungsgrads der Synchronmaschine 5b erfolgen, so dass die ermittelten Differenzwerte entlang der Arbeitspunkttrajektorie A2 möglichst gering sind und der Wirkungsgrad der Synchronmaschine 5b entlang der Arbeitspunkttrajektorie A2 einen vorbestimmbaren Schwellwert nicht unterschreitet. Ferner kann darauf geachtet werden, dass die Gesamtamplitude der Nutzbestromungswerte Id und Iq entlang der Arbeitspunkttrajektorie A2 möglichst gering ist. Die Arbeitspunkttrajektorie A2 ist in Fig. 2 dabei nur beispielhafter Natur und es ist klar, dass viele andere Arbeitspunkttrajektorien ebenso gewählt werden können, je nach Anforderungen an die Regelung der Synchronmaschine 5b. Beispielsweise kann mit der festzulegenden Arbeitspunkttrajektorie die Isohypse $\Delta$L2 im Kennfeld K verfolgt werden.

Fig. 3 zeigt eine schematische Darstellung eines Verfahrens 20 zum Einstellen des Arbeitspunkts einer Synchronmaschine, insbesondere einer Synchronmaschine 5b wie in Fig. 1 beispielhaft dargestellt. Dabei kann das Verfahren 20 auf die im Zusammenhang mit den Fig. 1 und 2 erläuterten Zusammenhänge zurückgreifen.

Zunächst erfolgt in einem generell mit Bezugszeichen 25 bezeichneten Schritt 25 ein Ermitteln jeweils eines Differenzwertes zwischen der Rotorinduktivität $L_d$ der Synchronmaschine in Polachsenrichtung und der Rotorinduktivität $L_q$ der Synchronmaschine in Pollückenrichtung für eine Vielzahl von unterschiedlichen 2-Tupeln aus im rotorfesten d,q-Koordinatensystem der Synchronmaschine eingestellten Nutzbestromungswerten.

Dies kann beispielsweise dadurch erreicht werden, dass in einem ersten Schritt 21 ein Erzeugen einer Vielzahl von Testspannungspulsen mit einer Arbeitsfrequenz erfolgt. In einem Schritt 22 kann dann ein Einspeisen der Vielzahl von Testspannungspulsen mit jeweils über eine volle Rotorumdrehung des Rotors der Synchronmaschine verteilten unterschiedlichen Phasenversätzen zur Rotorlage des Rotors der Synchronmaschine erfolgen. Danach kann in Schritt 23 ein Messen der Phasenströme der Synchronmaschine als Systemantwort auf die Vielzahl der eingespeisten Testspannungspulse erfolgen. Schließlich kann in einem Schritt 24 die Amplitude des Phasenstromverlaufs der gemessenen Phasenströme in Abhängigkeit der eingestellten Phasenversätze ermittelt werden.

Die Schritte 21 bis 24 können dann jeweils für eine Vielzahl von unterschiedlichen 2-Tupeln aus im rotorfesten d,q-Koordinatensystem der Synchronmaschine eingestellten Nutzbestromungswerten iteriert werden.

Unabhängig davon, wie die Differenzwerte zwischen der Rotorinduktivität $L_d$ der Synchronmaschine in Polachsenrichtung und der Rotorinduktivität $L_q$ der Synchronmaschine in Pollückenrichtung in Schritt 25 bestimmt werden, wird in einem Schritt 26 ein Kennfeld K für die ermittelten Differenzwerte in Abhängigkeit von den 2-Tupeln der Nutzbestromungswerten bestimmt. Danach kann in Schritt 27 ein Festlegen einer drehmomentabhängigen Arbeitspunkttrajektorie für die 2-Tupel der Nutzbestromungswerte unter Berücksichtigung der Höhe der ermittelten Amplituden entlang der festzulegenden Arbeitspunkttrajektorie erfolgen. Diese festgelegte drehmomentabhängige Arbeitspunkttrajektorie kann dann in Schritt 28 dazu genutzt werden, die Synchronmaschine anzusteuern.

**Patentansprüche**

1.  Verfahren (20) zum Betreiben einer Synchronmaschine (5b), **gekennzeichnet durch** die Schritte:

    Ermitteln (25) jeweils eines Differenzwertes zwischen der Rotorinduktivität $L_d$ der Synchronmaschine (5b) in Polachsenrichtung und der Rotorinduktivität $L_q$ der Synchronmaschine (5b) in Pollückenrichtung für eine Vielzahl von unterschiedlichen 2-Tupeln aus im rotorfesten Koordinatensystem (d, q) der Synchronmaschine (5b) eingestellten Nutzbestromungswerten (Id; Iq);
    Erstellen (26) eines Kennfelds (K) für die ermittelten Differenzwerte (ΔL1; ΔL2; ΔL3; ΔL4) in Abhängigkeit von den 2-Tupeln der Nutzbestromungswerten (Id; Iq);
    Festlegen (27) einer drehmomentabhängigen Arbeitspunkttrajektorie (A2) für die 2-Tupel der Nutzbestromungswerte (Id; Iq) unter Berücksichtigung der Höhe der ermittelten Differenzwerte entlang der festzulegenden Arbeitspunkttrajektorie (A2); und
    Betreiben (28) der Synchronmaschine (5b) gemäß der festgelegten Arbeitspunkttrajektorie (A2).

2.  Verfahren (20) nach Anspruch 1, wobei das Ermitteln (25) jeweils eines Differenzwertes zwischen der Rotorinduktivität $L_d$ der Synchronmaschine (5b) in Polachsenrichtung und der Rotorinduktivität $L_q$ der Synchronmaschine (5b) in Pollückenrichtung die folgenden Schritte umfasst:

    Erzeugen (21) einer Vielzahl von Testspannungspulsen mit einer Arbeitsfrequenz;
    Einspeisen (22) der Vielzahl von Testspannungspulsen mit jeweils über eine volle Rotorumdrehung des Rotors der Synchronmaschine (5b) verteilten unterschiedlichen Phasenversätzen zur Rotorlage des Rotors der Synchronmaschine (5b);
    Messen (23) der Phasenströme der Synchronmaschine (5b) als Systemantwort auf die Vielzahl der eingespeisten Testspannungspulse;
    Ermitteln (24) der Amplitude des Phasenstromverlaufs der gemessenen Phasenströme in Abhängigkeit der eingestellten Phasenversätze zum Ermitteln des Differenzwertes; und
    Iterieren der Schritte des Erzeugens (21), des Einspeisens (22), des Messens (23) und des Ermittelns (24) jeweils für eine Vielzahl von unterschiedlichen 2-Tupeln aus im rotorfesten Koordinatensystem (d, q) der Synchronmaschine (5b) eingestellten Nutzbestromungswerten (Id; Iq).

3.  Verfahren (20) nach einem der Ansprüche 1 und 2, wobei das Festlegen (27) der Arbeitspunkttrajektorie (A2) unter gleichzeitiger Berücksichtigung des Wirkungsgrads der Synchronmaschine (5b) erfolgt.

4.  Verfahren (20) nach Anspruch 3, wobei das Festlegen (27) der Arbeitspunkttrajektorie (A2) derart erfolgt, dass die ermittelten Differenzwerte entlang der Arbeitspunkttrajektorie (A2) möglichst gering sind und der Wirkungsgrad der Synchronmaschine (5b) entlang der Arbeitspunkttrajektorie (A2) einen vorbestimmbaren Schwellwert nicht unterschreitet.

5.  Verfahren (20) nach einem der Ansprüche 1 bis 4, wobei das Festlegen (27) der Arbeitspunkttrajektorie (A2) derart erfolgt, dass die Gesamtamplitude der Nutzbestromungswerte (Id; Iq) entlang der Arbeitspunkttrajektorie (A2) möglichst gering ist.

6.  Regelungssystem (10) für eine Synchronmaschine (5b), mit:

    einer Regelungseinrichtung (2), welche dazu ausgelegt ist, eine feldorientierte Regelung für die Synchronmaschine (5b) durchzuführen; gekenzeichnet durch eine Steuereinrichtung (9), welche dazu ausgelegt ist, eine Arbeitspunkttrajektorie (A2) für die feldorientierte Regelung der Regelungseinrichtung (2) gemäß dem Verfahren nach einem der Ansprüche 1 bis 5 festzulegen.

7. Regelungssystem (10) nach Anspruch 6, weiterhin mit:

einer Synchronmaschine (5b), welche dazu ausgelegt ist, durch die Regelungseinrichtung (2) gemäß der festgelegten Arbeitspunkttrajektorie (A2) der Steuereinrichtung (9) betrieben zu werden.

**Claims**

1. Method (20) for operating a synchronous machine (5b), **characterized by** the steps of:

identifying (25) a respective difference value between the rotor inductance $L_d$ of the synchronous machine (5b) in the polar axis direction and the rotor inductance $L_q$ of the synchronous machine (5b) in the interpolar axis direction for a multiplicity of different 2-tuples from useful energization values (Id; Iq) set in the coordinate system (d, q) of the synchronous machine (5b), which coordinate system is fixed to the rotor; compiling (26) a characteristic map (K) for the identified difference values (ΔL1; ΔL2; ΔL3; ΔL4) depending on the 2-tuples of the useful energization values (Id; Iq); determining (27) a torque-dependent operating point trajectory (A2) for the 2-tuples of the useful energization values (Id; Iq) taking into account the level of the identified difference values along the operating point trajectory (A2) to be determined; and operating (28) the synchronous machine (5b) in accordance with the determined operating point trajectory (A2).

2. Method (20) according to Claim 1, wherein the identification (25) of a respective difference value between the rotor inductance $L_d$ of the synchronous machine (5b) in the polar axis direction and the rotor inductance $L_q$ of the synchronous machine (5b) in the interpolar axis direction comprises the following steps:

generating (21) a multiplicity of test voltage pulses at an operating frequency; feeding in (22) the multiplicity of test voltage pulses with respective different phase offsets with respect to the rotor position of the rotor of the synchronous machine (5b), which phase offsets are distributed over a full rotor rotation of the rotor of the synchronous machine (5b); measuring (23) the phase currents of the synchronous machine (5b) as a system response to the multiplicity of test voltage pulses fed in; identifying (24) the amplitude of the phase current profile of the measured phase currents depending on the phase offsets set to identify the difference value; and iterating the steps of generating (21), feeding in (22), measuring (23) and identifying (24) respectively for a multiplicity of different 2-tuples from useful energization values (Id; Iq) set in the coordinate system (d, q) of the synchronous machine (5b), which coordinate system is fixed to the rotor.

3. Method (20) according to either of Claims 1 and 2, wherein the operating point trajectory (A2) is determined (27) while simultaneously taking into account the efficiency of the synchronous machine (5b).

4. Method (20) according to Claim 3, wherein the operating point trajectory (A2) is determined (27) in such a way that the identified difference values along the operating point trajectory (A2) are as low as possible and the efficiency of the synchronous machine (5b) along the operating point trajectory (A2) does not fall below a predefinable threshold value.

5. Method (20) according to one of Claims 1 to 4, wherein the operating point trajectory (A2) is determined (27) in such a way that the overall amplitude of the useful energization values (Id; Iq) along the operating point trajectory (A2) is as low as possible.

6. Regulation system (10) for a synchronous machine (5b), having:

a regulation device (2), which is designed to carry out field-oriented regulation for the synchronous machine (5b); **characterized by** a control device (9), which is designed to determine an operating point trajectory (A2) for the field-oriented regulation of the regulation device (2) in accordance with the method according to one of Claims 1 to 5.

7. Regulation system (10) according to Claim 6, furthermore having:

a synchronous machine (5b), which is designed to be operated by the regulation device (2) in accordance with the determined operating point trajectory (A2) of the control device (9).

**Revendications**

1.  Procédé (20) pour le fonctionnement d'une machine synchrone (5b), **caractérisé par** les étapes consistant à :

    déterminer (25) respectivement une valeur de différence entre l'inductance du rotor $L_d$ de la machine synchrone (5b) dans la direction de l'axe polaire et l'inductance du rotor $L_q$ de la machine synchrone (5b) dans la direction de l'espace interpolaire pour une pluralité de différents 2-uplets à partir de valeurs d'alimentation en courant utile (Ld ; Lq) réglées dans le système de coordonnées (d, q), solidaire du rotor, de la machine synchrone (5b) ;
    établir (26) un diagramme caractéristique (K) pour les valeurs de différence déterminées ($\Delta L1$ ; $\Delta L2$ ; $\Delta L3$ ; $\Delta L4$) en fonction des 2-uplets des valeurs d'alimentation en courant utile (Ld ; Lq) ;
    déterminer (27) une trajectoire de point de fonctionnement dépendant du couple (A2) pour les 2-uplets des valeurs d'alimentation en courant utile (Ld ; Lq) en tenant compte du niveau des valeurs de différence déterminées le long de la trajectoire du point de fonctionnement (A2) à déterminer ; et
    faire fonctionner (28) la machine synchrone (5b) conformément à la trajectoire de point de fonctionnement (A2) déterminée.

2.  Procédé (20) selon la revendication 1, dans lequel la détermination (25) respective d'une valeur de différence entre l'inductance du rotor $L_d$ de la machine synchrone (5b) dans la direction de l'axe polaire et l'inductance du rotor $L_q$ de la machine synchrone (5b) dans la direction de l'espace interpolaire, comprend les étapes consistant à :

    générer (21) une pluralité d'impulsions de tension de test à une fréquence de fonctionnement ;
    appliquer (22) la pluralité d'impulsions de tension de test avec des déphasages différents respectifs par rapport à la position du rotor de la machine synchrone (5b), répartis sur un tour complet du rotor de la machine synchrone (5b) ;
    mesurer (23) les courants de phase de la machine synchrone (5b) en tant que réponse du système à la pluralité d'impulsions de tension de test appliquées ;
    déterminer (24) l'amplitude de la caractéristique de courant de phase des courants de phase mesurés en fonction des déphasages réglés pour déterminer la valeur de différence ; et
    répéter les étapes de génération (21), d'application (22), de mesure (23) et de détermination (24), respectivement, pour une pluralité de différents 2-uplets à partir de valeurs d'alimentation en courant utile (Ld ; Lq) réglées dans le système de coordonnées (d, q), solidaire du rotor, de la machine synchrone (5b).

3.  Procédé (20) selon l'une des revendications 1 et 2, dans lequel la détermination (27) de la trajectoire du point de fonctionnement (A2) s'effectue en tenant compte simultanément du rendement de la machine synchrone (5b).

4.  Procédé (20) selon la revendication 3, dans lequel la détermination (27) de la trajectoire du point de fonctionnement (A2) s'effectue de telle sorte que les valeurs de différence déterminées le long de la trajectoire du point de fonctionnement (A2) soient aussi faibles que possible et que le rendement de la machine synchrone (5b) ne s'abaisse pas, le long de la trajectoire du point de fonctionnement (A2), en-dessous d'une valeur de seuil pouvant être prédéterminée.

5.  Procédé (20) selon l'une des revendications 1 à 4, dans lequel la détermination (27) de la trajectoire du point de fonctionnement (A2) s'effectue de telle sorte que l'amplitude totale des valeurs d'alimentation en courant utile (Ld ; Lq) le long de la trajectoire du point de fonctionnement (A2) soit aussi faible que possible.

6.  Système de régulation (10) destiné à une machine synchrone (5b), comportant :

    un dispositif de régulation (2) qui est conçu pour effectuer une régulation orientée champ pour la machine synchrone (5b) ; **caractérisé par**
    un dispositif de commande (9) qui est conçu pour déterminer une trajectoire du point de fonctionnement (A2) pour la régulation orientée champ du dispositif de régulation (2) par le procédé selon l'une des revendications 1 à 5.

7.  Système de régulation (10) selon la revendication 6, comprenant en outre :

une machine synchrone (5b) qui est conçue pour être mise en fonctionnement par l'intermédiaire du moyen de régulation (2) conformément à la trajectoire établie du point de fonctionnement (A2) du dispositif de régulation (9).

# FIG. 1

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009136381 A2
- DE 102006046638 A1
- US 20110199031 A1

**In der Beschreibung aufgeführte Nicht-Patentliteratur**

- **LINKE, M. et al.** Sensorless speed and position control of synchronous machines using alternating carrier injection. *Electric Machines and Drives Conference, IEMDC 2003, IEEE International gezeigt*